Europäisches Patentamt

European Patent Office

Office européen des brevets

(19)

(11) EP 1 544 851 A1

## (12) EUROPEAN PATENT APPLICATION
published in accordance with Art. 158(3) EPC

(43) Date of publication:
   22.06.2005 Bulletin 2005/25

(21) Application number: 03795219.9

(22) Date of filing: 12.08.2003

(51) Int Cl.⁷: **G11B 7/007**, G11B 7/24, G11B 7/26

(86) International application number:
   PCT/JP2003/010243

(87) International publication number:
   WO 2004/025630 (25.03.2004 Gazette 2004/13)

(84) Designated Contracting States:
   **AT BE BG CH CY CZ DE DK EE ES FI FR GB GR HU IE IT LI LU MC NL PT RO SE SI SK TR**
   Designated Extension States:
   **AL LT LV MK**

(30) Priority: **13.09.2002 JP 2002268535**

(71) Applicant: **MATSUSHITA ELECTRIC INDUSTRIAL CO., LTD.**
   **Kadoma-shi, Osaka 571-8501 (JP)**

(72) Inventors:
   • **KAWAGUCHI, Yuuko**
     **Ibaraki-shi, Osaka 567-0046 (JP)**
   • **TOMIYAMA, Morio**
     **Ikoma-shi, Nara 630-0136 (JP)**

(74) Representative: **Eisenführ, Speiser & Partner**
   **Patentanwälte Rechtsanwälte**
   **Postfach 10 60 78**
   **28060 Bremen (DE)**

### (54) OPTICAL RECORDING MEDIUM AND METHOD FOR PRODUCING THE SAME

(57)   An optical recording medium, comprising:

a substrate on which information is formed as pit rows constituted by concavities and convexities having a predetermined track pitch;
at least a first metal reflective layer; and
a transparent resin layer formed on the first metal reflective layer, which are formed on the substrate,

wherein the information is reproduced by applying a light beam onto a signal face formed on the resin layer side of the first metal reflective layer, **characterized in that** the following relational expression:

$$1.0 < D(S)/D(L) \le 1.3$$

is satisfied, provided that a depth of the shortest pit formed in the signal face is D(S) and a depth of the longest pit formed in the signal face is D(L).

Fig. 1

**Description**

FIELD OF THE INVENTION

The present invention relates to a discoid optical disk to be used for reproducing information.

BACKGROUND OF THE INVENTION

In a conventional optical recording medium, for example, an optical disk of a ROM type, emboss pits, which have a track pitch of 0.74 μm and the shortest pit length of 0.40 μm, are formed on a transparent substrate made of polycarbonate or the like, and a reflective layer made of Al or the like is formed thereon, and a light-converging beam is applied onto an information recording face from the surface side that is opposite to the face bearing the reflective layer so that information is reproduced.

The optical recording medium on and from which information is recorded and reproduced by applying a light beam thereto has been widely used, and there have been high expectations for improvements in the storage density.

In recent years, various optical disks, capable of reproducing large-volume image data, voice data and digital data, have been developed, and, for example, researches and developments have been carried out so as to increase the storage capacity of an optical disk with a diameter of 12 cm to a high-density storage capacity of 23.3 to 30 GB.

For example, these researches and developments are disclosed in Japanese Patent Application Laid-Open No. 54-136303 and Japanese Patent Application Laid-Open No. 6-150392.

(DISCLOSURE OF THE INVENTION)

(Technical Problems to be Solved by the Invention)

On the assumption of an information reproducing apparatus provided with an optical system with a wavelength λ = 405 nm of a reproducing light beam and a numerical aperture NA = 0.85 of an objective lens, the pit shape of an optical disk is calibrated so as to record information of not less than 25 GB on an optical disk having a diameter of 12 cm. For example, in the case of a (1, 7) RLL modulation, when the pit length of shortest pit length 2T is set to 0.149 μm, the track pitch is 0.32 μm.

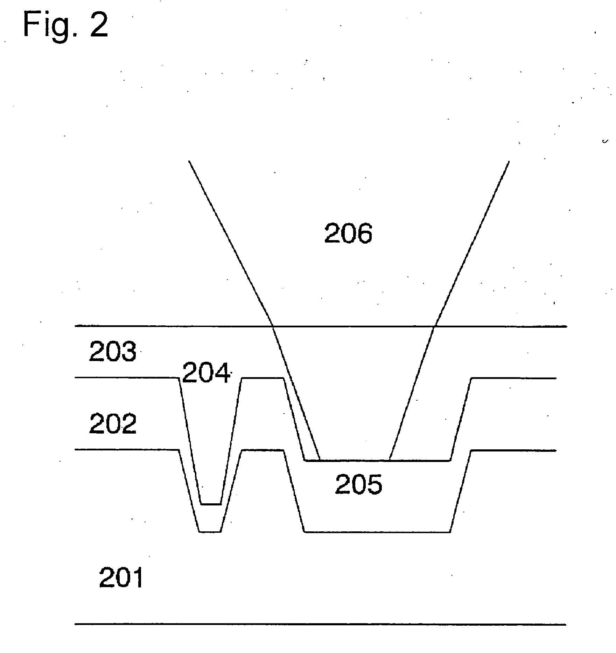

When a substrate having such fine pits is subjected to a metal reflective layer forming process by using a magnetron sputtering device, the following problems are raised. In the magnetron sputtering device, a surface of a target placed in a vacuum chamber is hit by argon ions to generate fine particles and the particles are adhered to the substrate to form a thin layer. The particles, discharged through the hitting operation of argon ions, are scattered radially, and the particles, which have flown from various angles, adhere to the substrate. In this case, as the pit shape on the substrate becomes smaller, it becomes difficult for the particles discharged from the target to reach the pit bottom portion. This phenomenon becomes more conspicuous as the pit shape becomes smaller. Fig. 2 shows a cross-sectional view of the optical disk. As shown in this Figure, the thickness of a thin layer to be formed in the bottom portion of the shortest pit 204 with a metal reflective layer 202 formed on a substrate'201 becomes considerably thinner in comparison with the thickness of a thin layer to be formed in the bottom portion of the largest pit 205.

As shown in Fig. 2, a transparent resin layer 203 is bonded onto this metal reflective layer 202 to manufacture an optical disk. When an optical beam 206 is emitted from this resin layer 203 side to reproduce pit signals, pit depths vary depending on the sizes of pits to cause deviations from an optimal pit depth that makes the reproduced signal maximal, resulting in degradation in the reproduced signal.

The present invention has been made to solve the above-mentioned problems, and its objective is to provide an optical disk for the next generation, which is applicable to a light beam for reproduction having a shorter wavelength by the use of an optical system having a higher numerical aperture, and capable of recording data with higher density in comparison with conventional DVDs.

(Method for Solving the Technical Problems)

In order to solve the above-mentioned problems, the objective of the present invention is achieved by the following means.

(1) An optical recording medium, comprising : a substrate on which information is formed as pit rows constituted by concavities and convexities having a predetermined track pitch; at least a first metal reflective layer; and a transparent resin layer formed on the first metal reflective layer, which are formed on the substrate, in which the information is reproduced by applying a light beam onto a signal face formed on the resin layer side of the first metal reflective layer, being characterized in that a depth of the shortest pit formed in the signal face is made different from a depth of the longest pit formed therein.

(2) The optical recording medium, according to the above (1) wherein at least the first metal reflective layer and the transparent resin layer formed on the first metal reflective layer are formed on the substrate in which a depth of the shortest pit and a depth of the longest pit are made equal in the substrate, characterized in that the following relational expression is satisfied: $1.0 < D(S)/D(L) \leq 1.3$

in which D (s) is a depth of the shortest pit formed in the signal face formed on the resin layer side of the first metal reflective layer and D(L) is a depth of the longest pit formed in the signal face is D(L).

(3) An optical recording medium, comprising:

> a substrate on which information is formed as pit rows constituted by concavities and convexities having a predetermined track pitch,
> at least a first metal reflective layer and a transparent resin layer formed on the first metal reflective layer, which are formed on the substrate,
> wherein the information is reproduced by applying a light beam onto a signal face formed on the resin layer side of the first metal reflective layer,

> characterized in that a depth of the shortest pit is made greater than a depth of the longest pit in the substrate, and the following relational expression is satisfied: $1/1.3 \leq D(S)/D(L) \leq 1.3$, provided that a depth of the shortest pit formed in the signal face formed on the resin layer side of the first metal reflective layer is defined as D(S) and that a depth of the longest pit formed on the signal face is defined as D(L).

(4) An optical recording medium, comprising

> a substrate on which information is formed as pit rows constituted by concavities and convexities having a predetermined track pitch,
> at least a first metal reflective layer and a transparent resin layer formed on the first metal reflective layer, which are formed on the substrate, in which the information is reproduced by applying a light beam onto a signal face formed on the resin layer side of the first metal reflective layer, characterized in that the following relational expression is satisfied: $\alpha(L) < \alpha(S)$, provided that, when a tangent line is drawn from a point positioned with a depth of $1/2 \times D(S)$ on the taper face of the shortest pit in the signal face, an angle that is made by the tangent line and a mirror face portion without pits formed therein is defined as $\alpha(S)$, and that, when a tangent line is drawn from a point positioned with a depth of $1/2 \times D(L)$ in the taper face of the longest pit, an angle that is made by the tangent line and a mirror face portion without pits formed therein is defined as $\alpha(L)$.

(5) Being characterized in that, supposing that a depth of the shortest pit in the substrate is d(S), and that a depth of the longest pit in the substrate is d(L), the following relational expression is satisfied: $1.0 \leq d(L)/d(S) \leq 1.3$.

(6) Being characterized in that, supposing that the wavelength of a light source in the light beam is $\lambda$, and that a refractive index of the transparent resin layer is n, the depth D(S) of the shortest pit formed in the signal face satisfies the following relational expression: $\lambda/(5 \times n) < D(S) < \lambda/(3 \times n)$.

(7) Being characterized in that the depth d(S) of the shortest pit length in the substrate is made smaller than D(S) of the shortest pit formed in the signal face so that the depth D(S) is set to a desired value.

(8) Being characterized in that the depth d(S) of the shortest pit length in the substrate satisfies the following relational expression: $\lambda/(6 \times n) < d(S) < \lambda/(3 \times n)$.

(9) Being characterized in that the first metal reflective layer is made of an alloy mainly containing Ag with a weight ratio of Ag being set to not less than 97%.

(10) Being characterized in that the first metal reflective layer is made of an alloy represented by a composition formula $Ag_xM_{1-x}$, in which M is at least the one selected from the group consisting of Pd, Cu, Pt, Rh, Nd and Ni and x represents a value of not less than 97% in weight ratio.

(11) Being characterized in that the first metal reflective layer is made of Ag or an alloy material mainly containing Ag, with the layer thickness being set in a range from not less than 10 nm to not more than 75 nm.

(12) Being characterized in that the first metal reflective layer is made of Al or a metal material mainly containing Al, with the layer thickness being set in a range from not less than 7 nm to not more than 50 nm.

(13) Being characterized in that the track pitch is set in a range from not less than 0.24 $\mu$m to not more than 0.36 $\mu$m, and the shortest pit length is set in a range from not less than 0.14 $\mu$m to not more than 0.21 $\mu$m.

(14) Being characterized in that the reproduction is carried out by an optical recording medium reproducing apparatus provided with an optical system in which the wavelength $\lambda$ of the light beam from light source is set in a range from not less than 400 nm to not more than 410 nm and the numerical aperture NA of the objective lens is set in a range from not less than 0.84 to not more than 0.86.

(15) Being characterized in that a substrate is manufactured so that a depth d(S) of the shortest pit length in the substrate satisfies a range represented by $\lambda/(6 \times n) < d(S) < \lambda/(3 \times n)$ and a metal reflective layer is formed so that a depth D(S) of the shortest pit in the signal face is set to a desired value.

(16) A manufacturing method for an optical recording medium in which a light beam is applied to a signal face so that the information is reproduced, comprising:

recording information on a substrate by forming pit rows constituted by concavities and convexities with a predetermined track pitch in which a depth d(S) of the shortest pit length in the substrate satisfies a range represented by $\lambda/(6 \times n) < d(S) < \lambda/(3 \times n)$;

forming a metal reflective layer on the substrate as a signal face so that the depth of the shortest pit is made different from a depth of the longest pit; and

forming a transparent resin layer on the metal reflective layer.

(17) Being characterized in that the metal reflective layer is deposited and formed through an ion beam sputtering process and an Ar pressure at the time of forming the layer is set in a range from not less than 0.2 Pa to not more than 0.7 Pa, with the layer-forming time being set to not more than 1 s.

(18) Being characterized in that the metal reflective layer is formed through a magnetron sputtering process and an Ar pressure at the time of forming the layer is set in a range from not less than 0.2 Pa to not more than 0.7 Pa, with the layer-forming time being set to not more than 3 s.

(Embodiments for Carrying out the Invention)

The following embodiments of an optical recording medium in accordance with the present invention will mainly discuss a case in which an ROM-type optical disk is used; however, not limited to this optical disk and the shape thereof, the present invention can be applied to various optical recording media having fine pits formed on an information recording layer, such as magneto-optical disks and phase-change disks.

In order to form a high-density optical disk, forming narrow track pitches and miniaturizing the shortest mark length are required. However, when the track pitch is made too narrow, crosstalk in the RF signal characteristic becomes greater, failing to maintain a sufficient system margin. When the shortest pit length is made too small, the resolution of the reproduced signal is lowered, causing a reduction in the jitter value of the reproduced signal. After continuous examinations by using an information reproducing apparatus with a wavelength $\lambda = 405$ nm of a reproducing light beam and a numerical aperture NA = 0.85 of an objective lens, it has been found that the track pitch width that would make crosstalk signals cause no problems with practical use of the main signal is not less than 0.24 $\mu$m. After examinations have been made on the resolution that would provide a superior reproduced signal, it has been found that a recording mark of 0.14 $\mu$m forms the pit minimum limit. Since the objective of the optical disk of the present invention is to provide an optical disk that achieves a recording capacity of not less than 23.3 GB when used for the above-mentioned information reproducing apparatus, the relational expression, (shortest pit length) $\times$ (track pitch width) $\leq 0.0512$ $\mu$m$^2$, needs to be satisfied. Consequently, supposing that the recording capacity is 23.3 GB and that the shortest recording mark is 0.14 $\mu$m, the upper limit of the track pitch width is set to 0.36 $\mu$m. In the same manner, supposing that the recording capacity is 23.3 GB, the upper limit of the shortest pit length is set to 0.21 $\mu$m at the time when the track pitch width becomes 0.24 $\mu$m that is the shortest value. Therefore, the following description will discuss a manufacturing method for an optical disk which uses a substrate having a track pitch width in a range from not less than 0.24 $\mu$m to not more than 0.36 $\mu$m and the shortest pit length in a range from not less than 0.14 $\mu$m to not more than 0.21 $\mu$m.

In order to record information of 25 GB on an optical disk of 12 cm, a substrate, which had a pit length of 0.149 $\mu$m with the shortest pit length of 2T, a track pitch of 0.32 $\mu$m and a pit depth of $\lambda/(4 \times n)$ that makes the amplitude of the RF signal maximal, was prepared. Here, n represents the refractive index of a transparent resin layer that is affixed onto a metal reflective layer. In the present examination, since a transparent resin layer having n = 1.53 was used, a substrate having a pit depth of $\lambda/(4 \times n) = 66$ nm was adopted. An alloy reflective layer of 60 nm, mainly containing Ag, was formed on this substrate by using a layer-forming device that had been used for manufacturing conventional DVD-ROM disks, and pit shapes were observed by using a scanning near-field light microscope. The depth of the longest pit was 68 nm, while the depth of the shortest pit was 100 nm. When this optical disk was reproduced by using an information reproducing apparatus having a wavelength $\lambda = 405$ nm of a reproducing light beam and a numerical aperture NA = 0.85 of an objective lens, it was found that since the depth of the shortest pit greatly deviated from the depth that would make the RF signal greatest, the signal resolution of the shortest pit was extremely lowered to cause serious degradation in the reproduced signal quality.

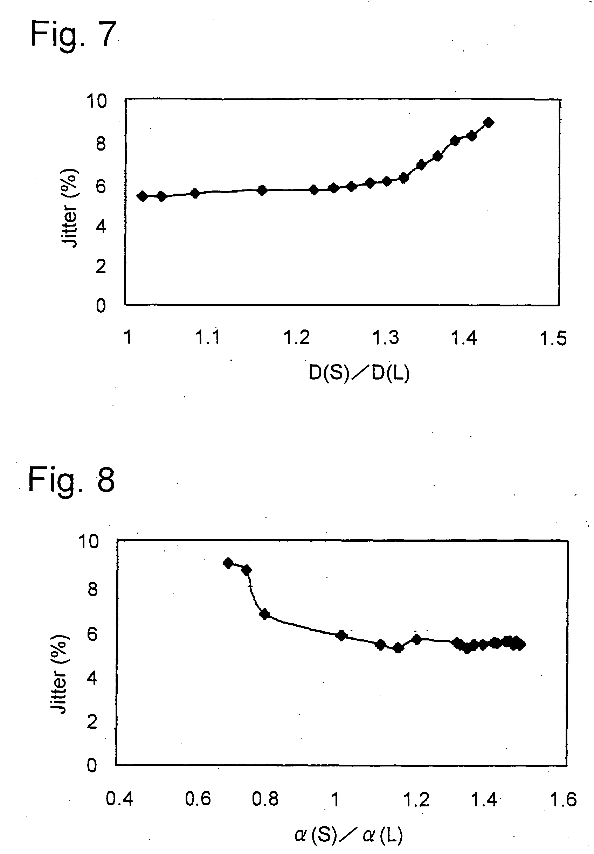

In order to solve the above-mentioned problems, observations on the pit shapes and various examinations on disk-manufacturing conditions were carried in the present invention. A metal reflective layer was formed on a substrate in which the depths of the longest pit and the shortest pit were made equal to each other, and the relationship between the ratio of the depth D(L) of the longest pit and the depth D(S) of the shortest pit in the signal face and the jitter value of the reproduced signal was examined, and the results thereof are shown in Fig. 7. The pit shape, the disk-manufacturing method and the like are described below in detail, and in the case when the layer-forming process was carried out on a substrate in which the depths of the longest pit and the shortest pit were made equal to each other, it became possible to provide an optical disk that could obtain a superior reproduced signal, by setting a ratio of the depth D(L) of the longest pit and the depth D(S) of the shortest pit to D(S)/D(L) ≤ 1.3.

In order to manufacture such an optical disk, the present embodiments propose three optical-disk manufacturing methods relating to (1) controls of layer-forming conditions by the use of an ion beam sputtering device or a magnetron sputtering device, (2) controls of the materials and layer thickness of a metal reflective layer and (3) controls of the pit depths based upon the pit length of the substrate.

First, the following description will discuss the relationship between the layer-forming process using the ion beam sputtering device or the magnetron sputtering device and the pit depth.

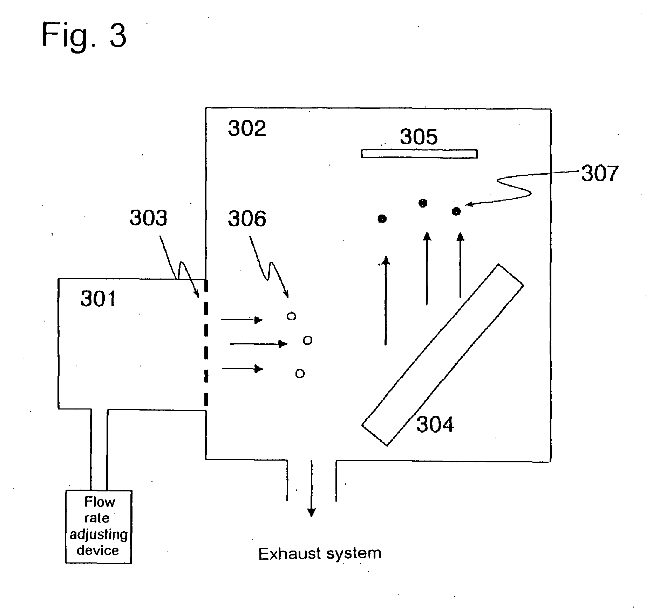

Fig. 3 is a schematic structural drawing that shows an ion beam sputtering process. This ion sputtering device is constituted by a plasma generation chamber 301 and a vacuum container 302, and a grid electrode 303 are provided between the two. A reflective layer material target 304 and a substrate 305 having the aforementioned fine pits in an information recording layer are set in the vacuum container 302. A reflective layer-forming operation onto the substrate is carried out through the following processes. First, argon plasma is generated in the plasma generation chamber, and the generated argon ion beam 306 is accelerated and directed to a reflective layer material target 304. The target is hit by the ions so that the target reflective layer metal particles 307 are generated to form a layer on the substrate 305. Since the metal particles to be layer-formed on the substrate fly and come in a direction perpendicular to the substrate, the particles are easily adhered to bottom portions of fine pits.

With respect to the reflective layer material, an alloy mainly containing Ag with a weight ratio of Ag being set to not less than 97%, that is, more specifically, an alloy represented by a composition formula $Ag_xM_{1-x}$ is preferably used, and in this formula, M is a material selected from the group consisting of Pd, Cu, Pt, Rh, Nd and Ni, and x represents a value of not less than 97% in weight ratio. Al or a metal material mainly containing Al may be used.

The reason for the arrangement in which the difference in pit depths between the shortest pit and the longest pit is made smaller by setting the Ar pressure upon sputtering to a range from not less than 0.2 Pa to not more than 0.7 Pa by the use of the magnetron sputtering device is explained as follows. The reflective layer metal particles, discharged from the target by the argon gas, are scattered by argon gas inside the chamber before reaching the substrate so that they are made incident on the substrate diagonally. The possibility of the particles being scattered by argon gas is dependent on the pressure of the argon gas, and as the pressure of the argon gas becomes greater, the number'of the particles that are made incident on the substrate diagonally increases. The particles that have been made incident on the substrate diagonally are blocked by the taper face of the pit, with the result that the number of the particles to reach the pit bottom portion decreases. Consequently, as the pressure of the argon gas becomes higher, the layer thickness of the pit bottom portion, especially in the shortest pit, becomes thinner, making the difference in pit depths between the shortest pit and the longest pit greater. In contrast, in the disk manufacturing method of the present embodiment, the pressure of the argon gas is set to not more than 0.7 Pa so that the particles that are made incident on the substrate diagonally are reduced remarkably; thus, it becomes possible to suppress the ratio of pit depths between the shortest pit and the longest pit to not more than 1.3 times.

By setting the layer-forming time to not more than 3 s, the angle of the taper face of the shortest pit is made greater than that of the longest pit. The formation of the pit shape of this type makes it possible to provide a better reproduced signal, and also to shorten the tact simultaneously.

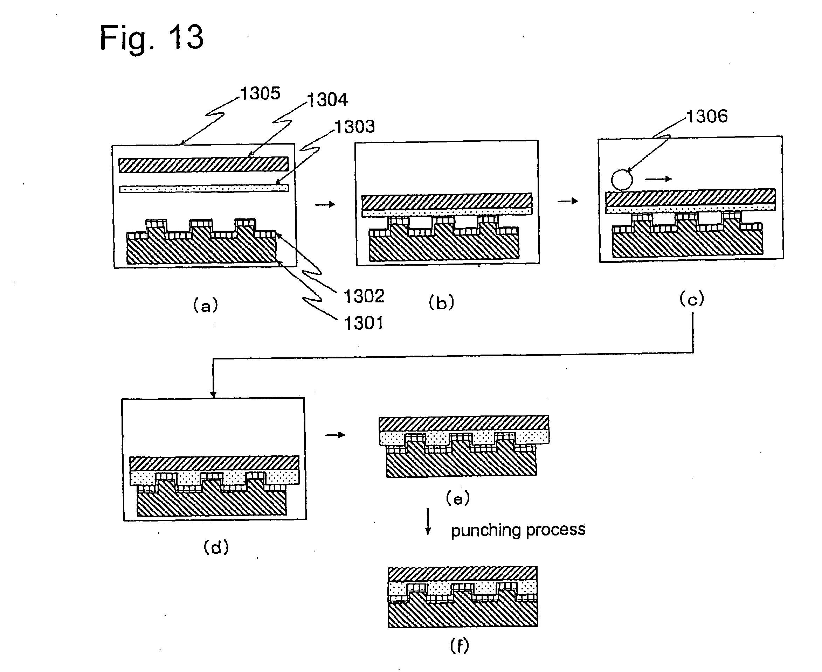

The optical disk medium, proposed in the present invention, has a structure in which a transparent resin layer having a thickness of about 0.1 mm is formed on a reflective layer, a light beam is directed thereto through the transparent resin layer, and the recorded signal is reproduced. Next, the following description will discuss a method for bonding the transparent resin layer. Fig. 13 shows one example of a process in which a transparent layer is bonded to an information recording face. A substrate 1301 having a thickness of 1.1 mm on which a metal reflective layer 1302 has been formed, a pressure-sensitive adhesive sheet 1303 having a thickness of 25 μm, and a transparent resin layer 1304 having a thickness of 75 μm, made from polycarbonate, are inserted into a vacuum joining device 1305 as shown in Fig. 13(a). With respect to the pressure-sensitive adhesive sheet and the material for the transparent resin layer, the thinner the thickness thereof, the more beneficial in achieving a high NA; however, the sheets having the thicknesses of these levels are adopted in order to ensure protective functions. The thickness of the pressure-sensitive adhesive sheet may be made thinner as long as a sufficient bonding force is maintained. Next, a decompressing process is carried out by using a vacuum pump until the air pressure inside the vacuum joining device has reached $10^{-2}$Pa. After the degree of vacuum has been stabilized, the pressure-sensitive adhesive sheet 1303 and the transparent resin layer 1304 are joined onto the metal reflective layer. Thereafter, these sheets are press-bonded by using a roller 1306, as shown in Fig. 13(c).

Upon joining the sheets, by reducing the peripheral air pressure, it is possible to greatly reduce dusts and air pores located between the transparent resin layer and the metal reflective layer. Lastly, this is punched into a disc shape so that an optical disk having a signal recording face on which a transparent resin layer is formed is prepared (Fig. 13(f)).

Referring to Figures, the following description will discuss specific embodiments to which the present invention is applied.

(Embodiment 1)

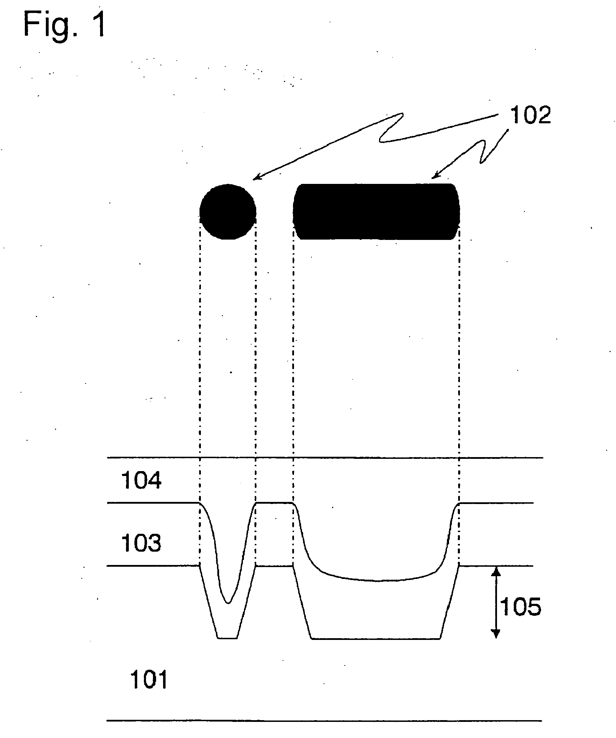

Fig. 1 is a structural cross-sectional view that shows an optical disk of the present invention. Pits 102, which represent data information, are formed on one side of a substrate 101 having a thickness of 1.1 mm, which may be, or may not be transparent. A metal reflective layer 103 is formed on this, and a transparent layer, which serves as a thin protective layer 104 having a thickness of, for example, 0.1 mm, is further formed thereon.

In the present embodiment, a (1,7) RLL modulation system is used, and an optical disk of 12 cm, having a track pitch of 0.32 $\mu$m and the shortest pit length of 0.149 $\mu$m, is manufactured. This optical disk is capable of recording information of 25 GB. The pit depth 105 on the substrate is adjusted to 65 nm.

The above-mentioned substrate was attached to a substrate holder in the vacuum chamber of a static opposed-type magnetron sputtering device, and the vacuum chamber was evacuated by using a vacuum pump. Upon completion of the evacuation, the pressure meter showed $2*10^{-6}$ Pa. A target of $Ag_{98.1}Pd_{0.9}Cu_{1.0}$ (subscripts represent weight percentages) was attached to a cathode and argon gas was introduced so as to be set to 0.3 Pa; thus, a sputtering process was started. The layer-forming time was 2.2 s, and power was applied so that the layer thickness of the mirror face portion was set to 60 nm.

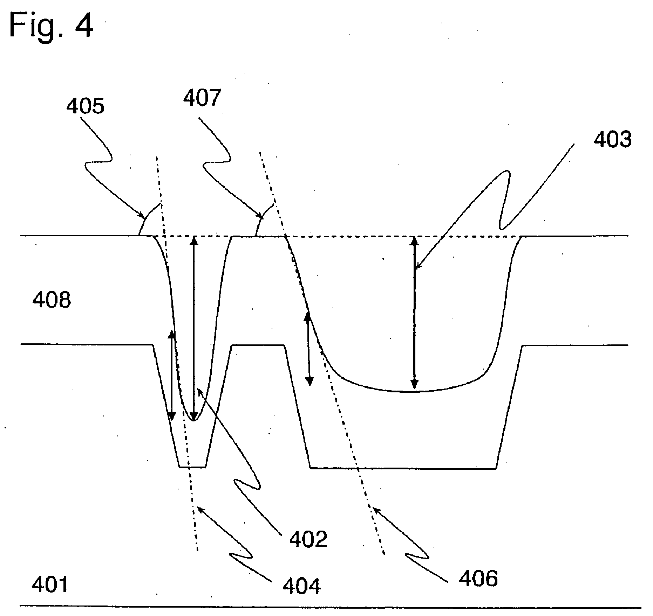

With respect to the disk on which a metal reflective layer had been formed, pit shapes were observed by using a scanning near-field light microscope (hereinafter, referred to as AFM). Referring to a schematic cross-sectional view of the optical disk shown in Fig. 4, the results of the observation are discussed. The pit depth 402 (hereinafter, referred to as D(S)) of the shortest pit length was 75 nm, and the pit depth 403 (hereinafter, referred to as D(L)) of the longest pit length was 65 nm. In other words, D(S)/D(L) was 1.15. In this manner, when the layer-forming process is carried out by using a magnetron sputtering device, the phenomenon that the depths of shortest pit and longest pit become different from each other takes place. When a tangent line 404 was drawn from a point positioned with a depth of 1/2 $\times$ D(S) on the taper face of the shortest pit, an angle 405 (hereinafter, referred to as $\alpha$(S)) that was made by the tangent line 404 and a mirror face portion without pits formed therein was 82°. In the same manner, when a tangent line 406 was drawn from a point positioned with a depth of 1/2 $\times$ D(L) on the taper face of the longest pit, an angle 407 (here-inafter; referred to as $\alpha$(L)) that was made by the tangent line 406 and a mirror face portion without pits formed therein was 78°.

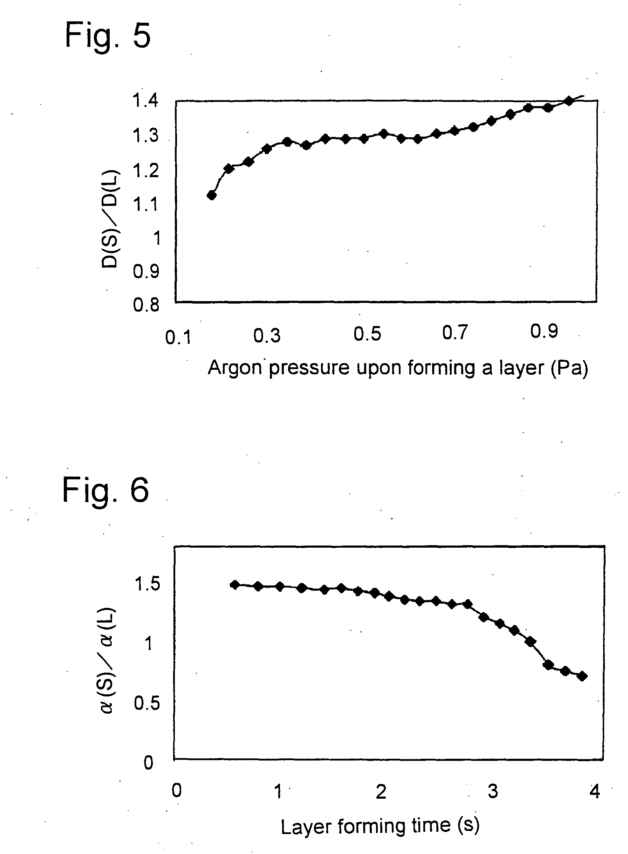

Since this ratio D(S)/D(L) varies greatly depending on the pressure of argon gas upon forming a layer, the ratio D(S)/D(L) was measured while the pressure of argon gas was changed upon forming a layer, and Fig. 5 shows a graph of the measurements. Since the layer-forming rate varied in response to variations in the pressure of argon gas upon forming a layer, the layer-forming time was adjusted in a range from 2.1 s to 2.6 s so that the layer thickness of the reflective layer to be formed on the mirror face portion was made constant.

When the pressure of the argon gas is increased, the possibility of metal particles discharged from the target being scattered upon collision with the argon gas inside the chamber becomes higher, with the result that the particles that are made incident on the substrate diagonally increase to make the ratio D(S)/D(L) greater.

Moreover, $\alpha$(S) and $\alpha$(L) vary greatly depending on the layer-forming time. Fig. 6 is a graph in which the layer-forming time is plotted on the axis of abscissas and $\alpha$(S)/$\alpha$(L) is plotted on the axis of ordinates.

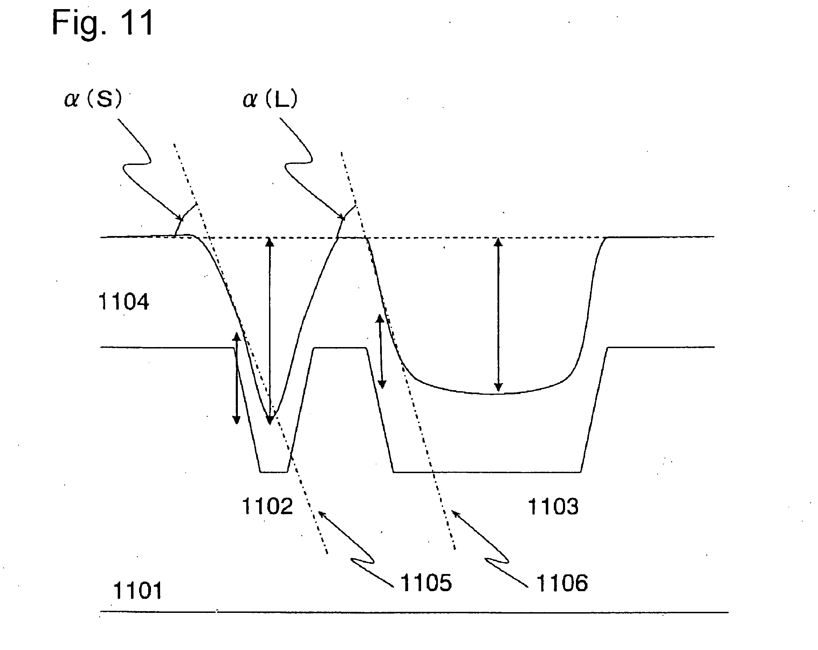

When the layer-forming time is prolonged, $\alpha$(S) tends to become smaller. Fig. 11 is a schematic cross-sectional view that shows a state in which the layer-forming time is set to 3.5 s and $\alpha$(S) becomes greater than $\alpha$(L).

Next, a transparent resin layer was formed on the metal reflective layer by using a pressure-sensitive adhesive sheet. At this time, the thickness of the transparent resin layer was adjusted to 100 $\mu$m.

The information reproducing process from the optical disk was carried out by directing laser light to the optical disk from the transparent resin layer side through an objective lens so as to be converged onto the metal reflective layer so that the variation in light intensity of the reflected light is detected as the recorded information of the pit.

By using an information-reproducing apparatus having a wavelength $\lambda$ of 405 nm of a reproducing light beam and a numerical aperture NA of 0.85 of an objective lens, reproducing and evaluating processes for signals were carried out. With respect to the quality of reproduced signals from an optical disk only for reproduction, it is easily analogized that the mark shape and the depth of the shortest pit length that makes the signal amplitude smallest give great effects thereto. In the present embodiment, the correlation between the pit shape and the reproduced signal quality is examined quantitatively. When deviations in the reflective layer upon manufacturing a large number of disks and production deviations in the signal reproducing apparatuses are taken into consideration, the minimum value of jitter values that represent the superiority or inferiority of a reproduction signal needs to be set to 6.5% or less. Therefore, optical disks having various pit depths were prepared, and examinations were carried out to find what degree of influences each of parameters, that is, (1) the layer thickness of the metal reflective layer, (2) D(S)/D(L) and (3) $\alpha$(S)/ $\alpha$(L), would give to the pit shape and depth as well as to the jitter value of the reproduced signal.

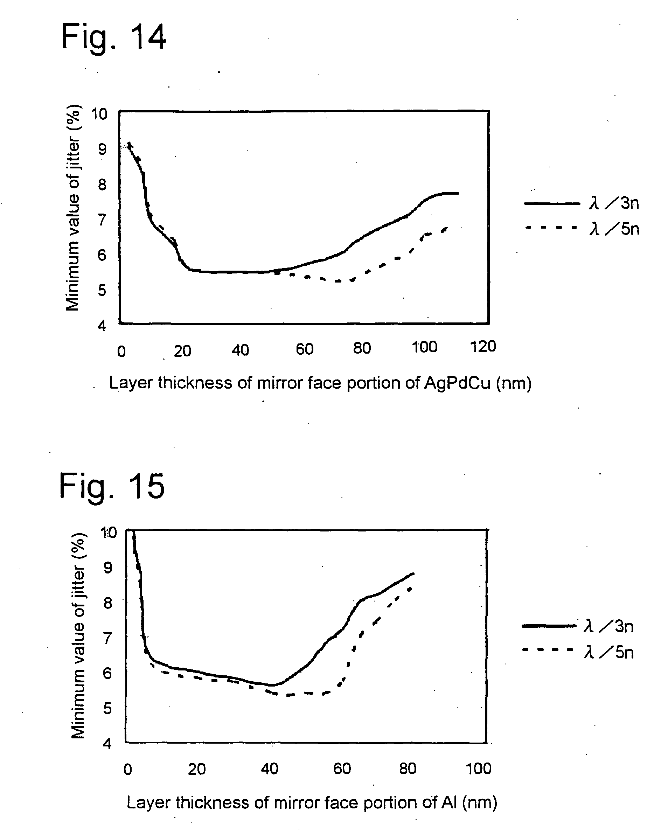

In this case, in order to obtain a high reflectance, the following examination was performed on the layer thickness of each of metal reflective layers of AgPdCu and Al. Fig. 14 shows a relationship between the layer thickness of a metal reflective layer (in which the layer thickness value represents a value of the layer thickness of a mirror face portion bearing no recorded pits) and the minimum value of the jitter value of a reproduced signal, when AgPdCu is adopted as the metal reflective layer. Fig. 15 shows a relationship between the layer thickness of a metal reflective layer and the minimum value of the jitter value of a reproduced signal, when Al (in which the layer thickness value represents a value of the layer thickness of a mirror face portion bearing no recorded pits) is adopted as the metal reflective layer. Two types of substrates were prepared, and the respective substrates had pit depths of $\lambda/3n$ (= 88 nm) and $\lambda/5n$ (= 53 nm), and in Figs. 14 and 15, a solid line indicates data on the substrate having the depth of $\lambda/3n$ and a dot line indicates data on the substrate having the depth of $\lambda/5n$.

In the case when the layer thickness of the metal reflective layer is too thin, since a sufficient quantity of reflected light is not obtained, the quality of the reproduced signal deteriorates, resulting in an increase in the jitter value. Figs. 14 and 15 respectively indicate that when AgPdCu is adopted as the metal reflective layer material, a layer thickness of 10 nm or more is required, and that when Al is adopted as the metal reflective layer material, a layer thickness of 7 nm or more is required. In the case when the layer thickness of the metal reflective layer is made thicker, since the depth of the shortest pit becomes greater, the quality of the reproduced signal deteriorates. When the pit depth is near $\lambda/4n$, the highest signal amplitude is obtained with respect to the reproduced signal. In the case when a layer-forming process is carried out on an optical disk substrate on which fine pits are formed as proposed by the present invention, as the layer thickness of the metal reflective layer is made thicker, it becomes more difficult to form a metal reflective layer on the bottom portion of each fine pit, with the result that the depth becomes larger. In other words, in the case of an optical disk having a pit depth of $\lambda/5n$ on the substrate, as the metal reflective layer is made thicker, the depth of the shortest pit length becomes greater to come close to $\lambda/4n$ that makes the reproduced signal amplitude greatest so that the jitter value becomes the smallest at a certain layer thickness (about 73 nm in the case of AgPdCu alloy). However, when the layer thickness is made further greater so that the depth of the shortest pit length becomes greater than $\lambda/4n$, the reproduced signal deteriorates. In contrast, in the case when a reflective layer is formed on a substrate having a pit depth of $\lambda/3n$, as the metal reflective layer is made thicker, the depth of the shortest pit length gradually deviates from $\lambda/4n$. Consequently, the layer thickness range of a metal reflective layer in which the minimum value of the jitter value is not more than 6.5% becomes narrower than that of an optical disk prepared by forming a layer on a substrate having a pit depth of $\lambda/5n$. Therefore, the upper limit of the metal reflective layer is defined as a layer thickness that provides a superior signal when the layer is formed on a substrate having the deepest pit. As will be described later, since the pit depth of the substrate is preferably set to not more than $\lambda/3n$, Fig. 14 indicates that, when an AgPdCu alloy is adopted as the metal reflective layer, the layer thickness is preferably set in a range from not less than 10 nm to not more than 75 nm. In the same manner, Fig. 15 indicates that, when Al is adopted as the metal reflective layer, the layer thickness is preferably set in a range from not less than 7 nm to not more than 50 nm.

Fig. 7 is a graph in which the ratio of D(S)/D(L) is plotted on the axis of abscissas and the jitter value of the reproduced signal is plotted on the axis of ordinates. The graph indicates that when the ratio of D(S)/D(L) exceeds 1.30, the reproduced signal deteriorates. This is presumably_because the pit depth of the shortest mark becomes deeper to cause a reduction in the reproduced signal amplitude. Therefore, in order to obtain a desired reproduced signal, the ratio of D(S)/D(L) is preferably set in a range from more than 1.0 to not more than 1.3. Fig. 5 indicates that upon forming a layer, the argon pressure, which satisfies $1.0 < D(S)/D(L) \leq 1.3$, is within a range from not less than 0.2 Pa to not more than 0.7 Pa. Therefore, in the case when a layer-forming process of a reflective layer is carried out by using a magnetron sputtering device, the argon pressure at the time of forming a layer is preferably set in a range from not less than 0.2 Pa to not more than 0.7 Pa. In the optical disks used for these tests, a relationship, $\alpha(S) > \alpha(L)$, was always satisfied.

The following description will discuss the size relation of $\alpha(S)$ and $\alpha(L)$ as well as the signal quality. Fig. 8 is a graph in which the ratio $\alpha(S)/\alpha(L)$ is plotted on the axis of abscissas and the jitter value of the reproduced signal is plotted on the axis of ordinates. As described earlier, since the reproduced signal quality is greatly dependent on the mark shape of the shortest pit length, the angle of $\alpha(S)$ is considered to give great effects to the quality of a reproduced signal. As $\alpha(S)$ increases, the build-up of the reproduced signal waveform of the shortest pit length becomes greater, making the jitter value of $\alpha(S)$ smaller. As indicated by Fig. 8, when $\alpha(S)/\alpha(L)$ becomes smaller than 1, the jitter value extremely deteriorates. Therefore, as shown in the graph, when $\alpha(S) > \alpha(L)$ is satisfied, it becomes possible to reproduce a superior signal with good quality. As shown in Fig. 6, in the case when a layer-forming process for a reflective layer is carried out by using a magnetron sputtering device, the relationship of $\alpha(S) > \alpha(L)$ is satisfied if the layer-forming time is within 3 s. Consequently, when the layer-forming time is set within 3 s, it becomes possible to prepare an optical disk that can reproduce a superior signal with a small jitter value.

Here, in the present embodiment, the layer-forming process is carried out by using a static opposed-type direct-current magnetron sputtering device; however, not particularly limited to this device, any other layer-forming device, for example, an ion-beam sputtering device or a vacuum vapor deposition machine, may be used as long as the layer-forming device provides layer-forming conditions that satisfy $D(S)/D(L) \leq 1.3$ and $\alpha(S) > \alpha(L)$.

In the present embodiment, an AgPdCu alloy has been used; however, in addition to this, pure Ag or an Ag alloy containing at least one material selected from the group consisting of Pd, Cu, Pt, Rh, Nd and Ni, preferably Pt, Rh, Nd and Ni, may be used as the metal material.

(Embodiment 2)

In the present embodiment, an optical disk substrate of 12 cm, which had a track pitch of 0.26 µm and the shortest pit length of 0.149 µm, with information of 30 GB being recorded thereon, was manufactured. The manufacturing method for the substrate was the same as that of Embodiment 1. The substrate having a pit depth of 65 nm was used.

An Al layer was formed on the optical disk substrate by using an ion-beam sputtering layer-forming device so that the reflective layer thickness on a mirror face portion was set to 40 nm. In the present embodiment, pure Al was used as the metal reflective layer; however, a slight amount of material, such as Ti, Cr and Co, may be added to the target material so that it becomes possible to use a reflective layer that is superior in corrosion resistance.

The shapes of pits were observed. After an Al layer formation, the pit depth $D(S)$ of the shortest pit length was 72 nm, and $\alpha(S)$ was 85°. The pit depth $D(L)$ of the longest pit length was 69 nm, and $\alpha(L)$ was 83°.

In this manner, an optical disk having a ratio of $D(S)/D(L)$ of 1.04 was obtained by using an ion beam sputtering device.

The same processes as those of Embodiment 1 were carried out so that a transparent resin layer was bonded to a metal reflective layer.

By using an information-reproducing apparatus having a wavelength $\lambda$ of 405 nm of a reproducing light beam and a numerical aperture NA of 0.85 of an objective lens, reproducing and evaluating processes for signals were carried out. With respect to the quality of reproduced signals from an optical disk only for reproduction, the jitter value from the shortest pit length with the smallest signal amplitude gives great influences thereto. For this reason, in the present embodiment, the size of $D(S)$ and the quality of the reproduced signal were examined. Substrates of seven kinds having different pit depths (30 nm to 90 nm) were prepared, and a layer-forming process was carried out on each of the substrates so as to deposit and form Al having a thickness of 40 nm on the mirror face portion thereof by using an ion-beam sputtering device. Upon forming the layer, the Ar pressure was set to 0.3 Pa, with the layer-forming time being set to 0.8 s. The layer-forming process by the use of the ion-beam sputtering device tends to cause a longer layer-forming period in comparison with the process by the use of a magnetron sputtering device. In the present invention, the reflective layer was formed by setting the Ar pressure in a range from not less than 0.2 Pa to not more than 0.7 Pa so as to shorten the layer-forming time to not more than 1 s.

Table 1

| Pit depth in substrate (nm) | D(S) (nm) | D(L) (nm) | Jitter value (%) |
|---|---|---|---|
| 30 | 32 | 32 | could not be measured |
| 40 | 41 | 41 | 7.2 |
| 50 | 51 | 50 | 5.5 |
| 60 | 64 | 62 | 5.4 |
| 70 | 75 | 71 | 5.2 |
| 80 | 87 | 83 | 5.4 |
| 90 | 97 | 92 | 6.8 |

Table 1 shows pit depths in the substrate, values of $D(S)$ and $D(L)$ and a signal jitter value, after an Al layer has been formed on a mirror face portion with a thickness of 40 nm by an ion-beam spattering device.

In general, it has been known that when the pit depth is $\lambda/(4 \times n)$, the reproduced signal has the greatest reproduced signal amplitude; however, even if the pit depth deviates from the depth of the maximum reproduced signal, the margin of the pit depth can be widened by optimizing the pit width, pit shape and the like.

Based upon the present examination, it has been found that, in order to obtain a sufficient reproducing margin, $D(S)$ needs to be set in a range from not less than 50 nm to not more than 80 nm, and that this range corresponds to a range from not less than $\lambda/(5 \times n)$ to not more than $\lambda/(3 \times n)$.

As indicated by Embodiment 1, since the ratio $D(S)/D(L)$ between the shortest pit depth and the longest pit depth after forming the metal reflective layer is preferably set in a range from not less than 1.0 to not more than 1.3, the optimal range of the shortest pit depth (hereinafter, referred to as d(S)) in the substrate prior to the reflective layer formation is set in a range from not less than $\lambda/(5 \times n)/1.3$ to $\lambda/(3 \times n)/1.00$, that is, in a range from not less than $\lambda/(6.5 \times n)$ to $\lambda/(3 \times n)$.

(Embodiment 3)

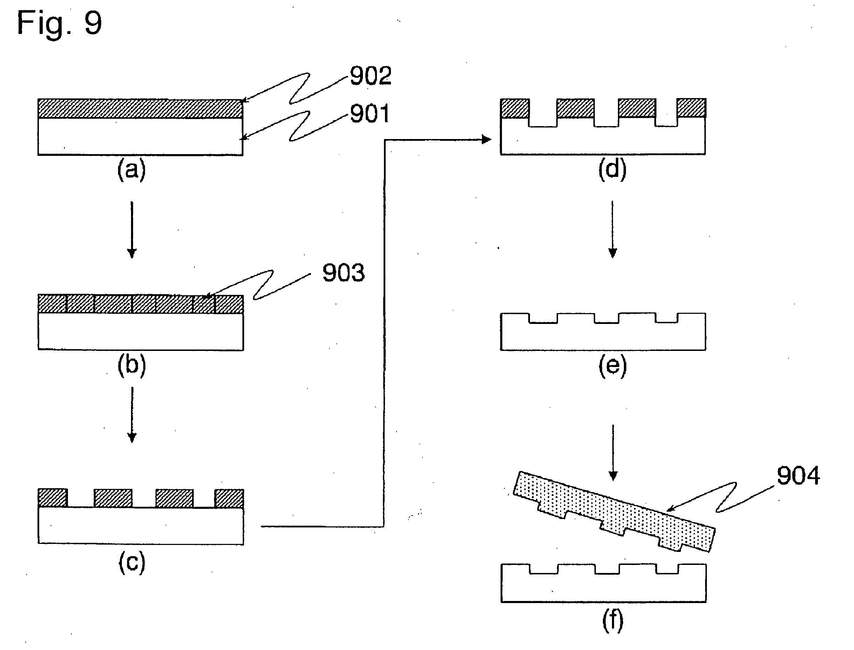

In the present embodiment, an optical disk substrate of 12 cm, which had a track pitch of 0.26 μm and the shortest pit length of 0.149 μm, with information of 30 GB being recorded thereon, was manufactured. A substrate in which the pit depth of the shortest mark length was made smaller by adopting reactive ion etching (RIE) as the mastering process was used. Referring to Fig. 9, the following description will discuss a mastering process for forming a substrate in which pit depths are made different depending on the sizes of the pits.

First, an electron-beam-use resist 902 is applied to a base substrate 901 made from $SiO_2$ (Fig. 9(a)). The substrate is placed in an optical-disk base-substrate manufacturing device, and while this is being rotated, an electron beam, modulated in accordance with information data signals, is directed thereto so that fine pits are formed thereon in a spiral form (Fig. 9(b)). This is subjected to a developing process so that the exposed portion 903 by the electron beam is removed; thus, the surface of the base substrate is exposed (Fig. 9(c)). This is subjected to a reactive ion etching process (RIE) by using a non-developed face as a mask so that fine pits are formed in the base substrate (Fig. 9(d)). The resist on the non-developed face used as the mask is removed (Fig. 9(e)). A conductive layer is formed on the surface of the base substrate. The conductive layer is plated with metal to form a metal stamper 904, and separated from the base substrate (Fig. 9(f)). The metal stamper is placed in an injection-molding machine so that a substrate, made from polycarbonate resin or the like, is manufactured.

In the RIE method used in this process, there is a tendency that it is difficult for ions to reach the bottom of each of fine pits. For this reason, as the size of the pit becomes greater, the etching rate becomes higher to make the pit depth deeper.

In the present embodiment, $CHF_3$ gas was introduced into the chamber of the ion etching device, and the etching was carried out. In this case, the pressure of $CHF_3$ gas was set to 0.4 Pa, the RF power was set to 300 W and the etching time was set to 6 minutes. The metal stamper that was subjected to this etching process was used, and an optical disk substrate, extrusion-molded by use of such a metal stamper, had a depth d(S) in the shortest pit length of 52 nm and a depth d(L) in the longest pit length of 60 nm so that the rate d(L)/d(S) was set to 1.15.

Although $CHF_3$ gas was used in the present embodiment, $CF_4$ gas, or a mixed gas of $CHF_3$ and $CF_4$, or a mixed gas formed by mixing a nonvolatile gas, such as Ar, with each of these gases, may be used and the same effects can be obtained.

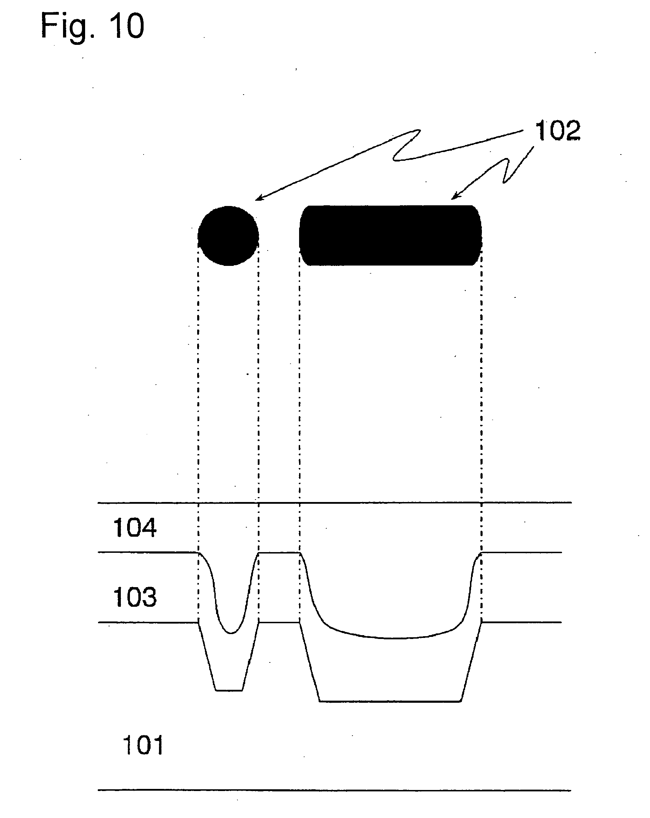

A reflective layer was formed on this optical disk substrate by using a magnetron sputtering device. AlTi was used as the reflective layer material, and the sputtering process was carried out so as to set the thickness of the mirror portion to 50 nm. Upon layer-formation, the argon pressure was set to 0.4 Pa, and the layer-forming time was set to 1 s. After the layer-formation, the optical disk was analyzed by AFM. As shown in Embodiment 1, since the magnetron sputtering process tends to make the reflective layer difficult to reach the bottom portion of a small-size pit, the pit depth of the shortest pit length becomes greater after the layer-forming process; thus, D(S) was set to 62 nm, and D(L) was set to 60 nm. Fig. 10 shows a schematic cross-sectional view of the disk after the AlTi-layer formation.

In this manner, when the RIE process is adopted in the mastering process, and the reflective layer is formed on a substrate in which d(S) is greater than d(L) by using the magnetron sputtering device; thus, it becomes possible to make the difference between D(S) and D(L) smaller. However, in the case when the RIE conditions are set extremely to make d(S) small, the width and the length of the shortest pit also become small, failing to obtain good signals. Experiments were carried out so as to find correlation between the pit depth in the signal face and the jitter value, while the depth of the substrate was varied. The results are shown in Table 2. It is preferable to adjust the depth of d(S) within the following range of ratio: $1/1.3 \leq d(L)/d(S) \leq 1.3$.

Table 2

| d(S)/d(L) | Jitter value (%) |
|-----------|------------------|
| 1/1.5     | 8.0              |
| 1/1.4     | 7.2              |
| 1/1.3     | 6.4              |
| 1/1.2     | 6.2              |
| 1/1.1     | 6.0              |

Table 2 (continued)

| d(S)/d(L) | Jitter value (%) |
|---|---|
| 1 | 6.0 |
| 1.1 | 6.3 |
| 1.2 | 6.3 |
| 1.3 | 6.4 |
| 1.4 | 7.4 |
| 1.5 | 7.9 |

By changing the pit depth of the substrate depending on the pit length, the difference in pit depths after the layer formation can be made smaller.

In the present embodiment, the pit depth is changed depending on the pit size by using the RIE process, and various mastering processes of this type have been proposed (for example, see Patent Documents 1 and 2). In the present invention, the same effects are expected by using any substrate as long as its pit depths in the substrate are set within a range of ratio of $1 \leq d(L)/d(S) \leq 1.3$, and the mastering process is not intended to be limited by the process described in the present embodiment.

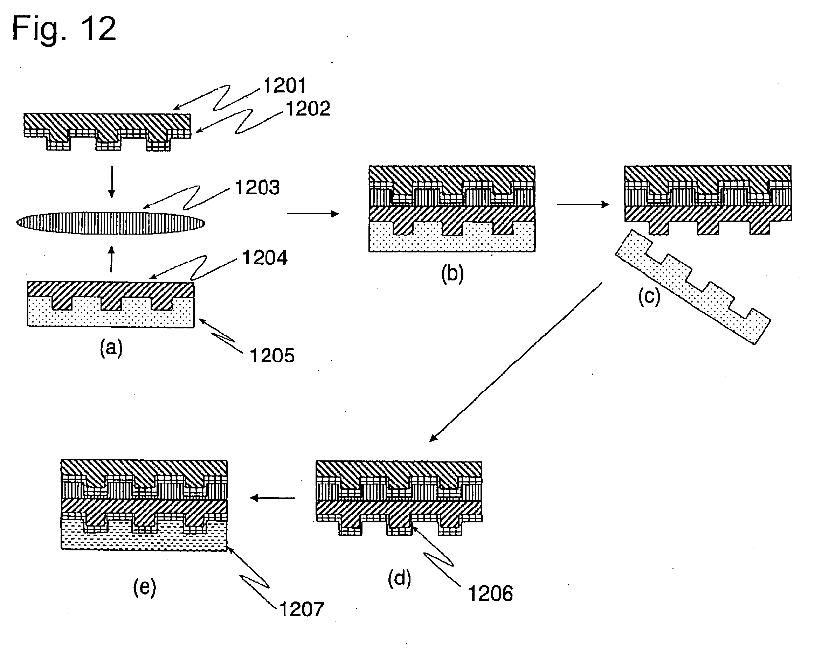

The present invention may be applied to a multi-layered optical recording medium that is formed by laminating a plurality of information recording layers so as to increase the recording capacity for information. Referring to Fig. 12, the following description will discuss one example of a manufacturing method for such a multi-layered optical recording medium.

On a main face of a polycarbonate substrate 1201 with fine pits that has a thickness of 1.1 mm, for example, a first metal reflective layer 1202, such as an Al layer, is formed with a thickness of 45 nm by using the aforementioned magnetron sputtering device, and on a stamper substrate 1205 with fine pits that is made of polycarbonate having a thickness of 1.1 mm, a photo-curable resin (2) 1204 having a superior peeling property is formed and cured with a thickness of about 10 $\mu$m. These substrate 1201 and stamper substrate 1205 are joined to each other through a photo-curable resin (1) 1203 having a strong bonding property (Fig. 12(a)). The joining process is carried out in the following manner: the substrate 1201 is set in a spin coater with the first metal reflective layer surface facing up, and the photo-curable resin (1) 1203 is dropped thereon. Then, the disk is rotated so that the thickness of the photo-curable resin (1) is made uniform within the disk. The photo-curable resin (2) is superposed on the resulting disk. Alternatively, the joining process may be carried out as follows: the stamper substrate 1205 is set onto a spin coater, and the photocurable resin (1) 1203 is applied to the photo-curable resin (2) 1204. At this time, the rotation speed of the spin coater is adjusted so that the thickness of the photo-curable resin (1) is set to 15 $\mu$m. Thereafter, the resulting disk is irradiated with an ultraviolet-ray lamp so that the photo-curable resin (1) 1203 is cured (Fig. 12(b)). The stamper substrate 1205 is separated from the photo-curable resin (2) 1204 (Fig. 12(c)), and a second metal reflective layer 1206 is formed by, for example, Ag with a thickness of 24 nm (Fig. 12(d)). Thereafter, a transparent resin layer 1207 having a thickness of 70 $\mu$m is bonded thereto by using, for example, a pressure-sensitive bonding sheet.

An information-reading process is carried out from the two-layered optical recording medium, by directing laser light onto the transparent resin layer 1207 side. The above-mentioned example has discussed a case in which the two-layered optical recording medium is formed; however, a multi-layered optical recording medium having two or more layers may be formed by joining substrates solidified with photo-curable resin to one another after the process of Fig. 12(d).

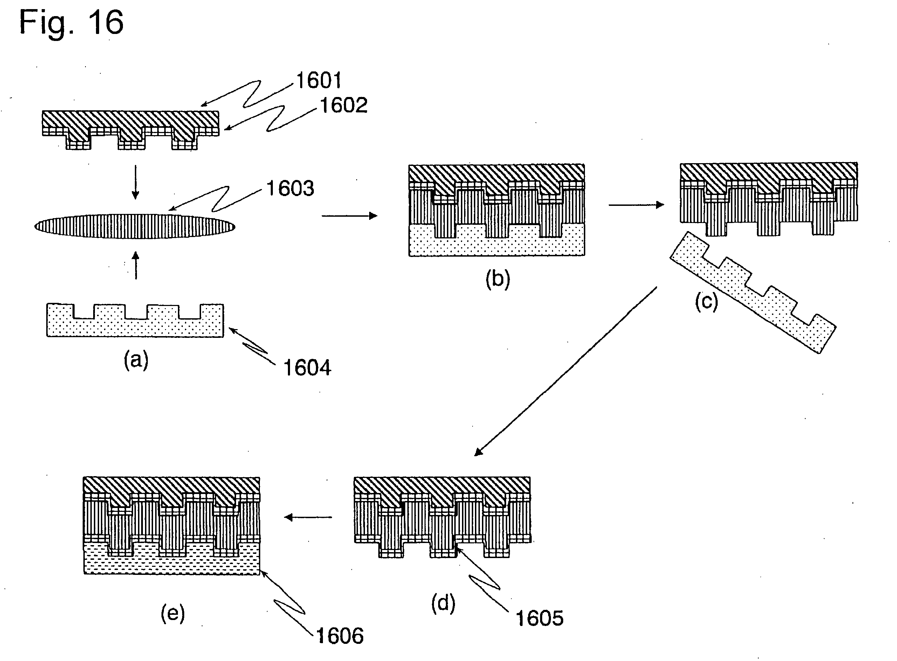

An olefin-based resin, which has a strong peeling property to a photo-curable resin, may be used for the stamper substrate. Referring to Fig. 16, the bonding method for this substrate will be explained. On a main face of a polycarbonate substrate 1601 with fine pits that has a thickness of 1.1 mm, for example, a first metal reflective layer 1602, such as an Al layer, is formed with a thickness of 45 nm by using the aforementioned magnetron sputtering device, and a stamper substrate 1604 with fine pits that is made from olefin having a thickness of 1.1 mm is prepared. These substrate 1601 and stamper substrate 1604 are joined to each other through a photo-curable resin 1603 (Fig. 16(a)). The joining process is carried out in the following manner: the substrate 1601 is set in a spin coater with the first metal reflective layer surface 1602 facing up, and the photo-curable resin 1603 is dropped thereon. Then, the disk is rotated so that the thickness of the photo-curable resin 1603 is made uniform within the disk. The stamper substrate 1604 may be superposed on this. Alternatively, the joining process may be carried out as follows: the stamper substrate 1604 is set onto a spin coater, and the photocurable resin 1603 is applied thereto, and joined to the substrate 1601 by rotating the disk. At this time, the rotation speed of the spin coater is adjusted so that the thickness of the photo-curable resin 1603 is set to 25 $\mu$m. Thereafter, the resulting disk is irradiated with an ultraviolet-ray lamp so that the photo-curable resin 1603 is cured (Fig. 16(b)). Next, the stamper substrate 1604 is separated from the photo-curable resin 1603 (Fig. 16(c)), and a second metal reflective layer 1605 is formed by, for example, Ag with a thickness of 24 nm (Fig. 16(d)). Thereafter, a transparent resin layer 1606 having a thickness of 70 μm is bonded thereto by using, for example, a pressure-sensitive bonding sheet.

Prior to the joining process of the transparent resin layer 1606, a curable resin layer may be formed, and by copying the stamper substrate thereon, a multi-layered structure may be formed.

In the above-mentioned embodiment, the pressure-sensitive bonding sheet has been used in the joining process of the transparent layer; however, in place of the pressure-sensitive bonding sheet, a medium, which is transparent and has a bonding property, such as a photo-curable resin and a dry photopolymer, may be used. Only the pressure-sensitive bonding sheet or photo-curable resin may be used for forming a transparent resin layer, without joining the transparent resin layer thereto.

(Effects of the Invention)

In accordance with the first aspect of an optical recording medium of the present invention, by limiting layer-forming conditions at the time of forming a reflective layer, the difference between the pit depth of the shortest pit length and the pit depth of the longest pit length is made smaller so that the angle, made by the taper face of the shortest pit and the mirror surface portion, can be made greater. Moreover, by using substrates having different pit depths to form a reflective layer, the depths of pits after the reflective layer formation are made uniform so that it becomes possible to provide an optical disk that can reproduce waveforms having small jitter values. The present invention having these effects greatly contributes to higher density in an optical disk.

(Brief Description of the Drawings)

Fig. 1: a structural cross-sectional view of an optical disk of the present invention.

Fig. 2: a cross-sectional view of an optical disk.

Fig. 3: schematic structural drawing that shows an ion beam sputtering process.

Fig. 4: a schematic cross-sectional view of an optical disk.

Fig. 5: a graph that shows a measured ratio of D(S)/D(L).

Fig. 6: a graph in which a layer-forming time is plotted on the axis of abscissas and a ratio $\alpha(S)/\alpha(L)$ is plotted on the axis of ordinates.

Fig. 7: a graph in which a ratio D(S)/D(L) is plotted on the axis of abscissas and a jitter value of reproduced signal is plotted on the axis of ordinates.

Fig. 8: a graph in which a ratio $\alpha(S)/\alpha(L)$ is plotted on the axis of abscissas and a jitter value of the reproduced signal is plotted on the axis of ordinates.

Fig. 9: a drawing that shows mastering processes which form a substrate in which pit depths are made different from each other depending on the sizes of pits.

Fig. 10: a schematic cross-sectional view after an AlTi layer has been formed.

Fig. 11: a schematic cross-sectional view that shows a state in which $\alpha(S)$ becomes greater than $\alpha(L)$ with a layer-forming time being set to 3.5 s.

Fig. 12: a drawing that shows one example of a manufacturing method for a multi-layered optical recording medium.

Fig. 13: a drawing that shows one example of processes for bonding a transparent layer to an information recording face.

Fig. 14: a relationship between a layer thickness of a metal reflective layer (in which the layer thickness value represents a value of the layer thickness of a mirror face portion bearing no recorded pits) and a minimum value of a jitter value of a reproduced signal, when AgPdCu is adopted as the metal reflective layer.

Fig. 15: a relationship between a layer thickness of a metal reflective layer (in which the layer thickness value represents a value of the layer thickness of a mirror face portion bearing no recorded pits) and a minimum value of a jitter value of a reproduced signal, when Al is adopted as the metal reflective layer.

Fig. 16: a drawing that shows a method used for bonding an olefin-based resin that has a strong peeling property to a photo-curable resin to a stamper substrate.

(Explanation of reference numerals)

101: Substrate, 102: Pits, 103: Metal reflective layer, 104: Protective layer, 105: Pit depth in substrate, 201: Substrate, 202: Metal reflective layer, 203: Transparent resin layer, 204: Shortest pit, 205: Longest pit, 206: Light beam, 301: Plasma generation chamber, 302: Vacuum container, 303: Grid electrode, 304: Reflective layer material target, 305: Substrate, 306: Ar plasma ion beam, 307: Metal particles, 401: Substrate, 402: Pit depth of shortest pit length D (S), 403: Pit depth of longest pit length, 404: Tangent line at position of 1/2 × D(S), 405: Angle made by tangent line 404 and mirror face portion, 406: Tangent line at position of 1/2 × D(L), 407: Angle made by tangent line 406 and mirror face portion, 408: Metal reflective layer, 901: Disk base substrate, 902: Resist for electron-beam, 903: Exposed portion, 904: Metal stamper, 101: Substrate, 102: Pits, 103: Metal reflective layer, 104: Protective layer, 1101: Substrate, 1102: Shortest pit, 1103: Longest pit, 1104: Reflective metal layer, 1105: Tangent line at position of 1/2 × D(S), 1106: Tangent line at position of 1/2 × D(L), 1201: Substrate, 1202: First metal reflective layer, 1203: Photo-curable resin (1), 1204: Photo-curable resin (2), 1205: Stamper substrate, 1206: Second metal reflective layer, 1207: Transparent resin, 1301: Substrate, 1302: Metal reflective layer, 1303: Pressure-sensitive adhesive sheet, 1304: Transparent resin layer, 1305: Vacuum joining device, 1306: Roller, 1601: Substrate, 1602: First metal reflective layer, 1603: Photo-curable resin, 1604: Stamper substrate, 1605: Second metal reflective layer, 1606: Transparent resin layer.

**Claims**

1. An optical recording medium, comprising:

    a substrate on which information is formed as pit rows constituted by concavities and convexities having a predetermined track pitch;
    at least a first metal reflective layer; and
    a transparent resin layer formed on the first metal reflective layer, which are formed on the substrate,
    wherein the information is reproduced by applying a light beam onto a signal face formed on the resin layer side of the first metal reflective layer,

    **characterized in that** a depth of the shortest pit formed in the signal face is made different from a depth of the longest pit formed therein.

2. The optical recording medium according to claim 1, wherein
    at least the first metal reflective layer; and
    the transparent resin layer formed on the first metal reflective layer are formed on the substrate in which a depth of the shortest pit and a depth of the longest pit are made equal in the substrate,
    **characterized in that** the following relational expression:

$$1.0 < D(S)/D(L) \leq 1.3$$

    is satisfied, provided that a depth of the shortest pit formed in the signal face is D(S) and a depth of the longest pit formed in the signal face is D(L).

3. The optical recording medium according to claim 1, wherein, with respect to the substrate in which a depth of the shortest pit is made greater than a depth of the longest pit in the substrate, supposing that a depth of the shortest pit formed in the signal face formed on the resin layer side of the first metal reflective layer is D(S) and a depth of the longest pit formed in the signal face is D(L), the following relational expression is satisfied:

$$1 < D(S)/D(L) \leq 1.3.$$

4. The optical recording medium according to claim 1, wherein, supposing that a depth of the shortest pit formed in the signal face formed on the resin layer side of the first metal reflective layer is D(S) and a depth of the longest pit formed in the signal face is D(L), and that, when a tangent line is drawn from a point positioned with a depth of 1/2 × D(S) on the taper face of the shortest pit in the signal face, an angle that is made by the tangent line and a mirror face portion without pits formed therein is defined as $\alpha(S)$, and that, when a tangent line is drawn from a point positioned with a depth of 1/2 × D(L) on the taper face of the longest pit, an angle that is made by the tangent line and a mirror face portion without pits formed therein is defined as $\alpha(L)$, the following relational expression is satisfied: $\alpha(L) < \alpha(S)$.

5. The optical recording medium according to claim 3 or claim 4, wherein the following relational expression is satisfied:

$$1.0 < d(L)/d(S) \leq 1.3,$$

provided that a depth of the shortest pit in the substrate is d(S), and that a depth of the longest pit in the substrate is d(L).

6. The optical recording medium according to any one of claims 1 to 5, wherein the depth D(S) of the shortest pit formed on the signal face satisfies the following relational expression: $\lambda/(5 \times n) < D(S) < \lambda/(3 \times n)$, provided that the wavelength of a light source in the light beam is $\lambda$ and a refractive index of the transparent resin layer is n.

7. The optical recording medium according to any one of claims 1 to 6, wherein the depth d(S) of the shortest pit length in the substrate is made smaller than D(S) of the shortest pit formed in the signal face so that the depth D(S) is set to a desired value.

8. The optical recording medium according to any one of claims 1 to 7, wherein the depth d(S) of the shortest pit length in the substrate satisfies the following relational expression:

$$\lambda/(6 \times n) < d(S) < \lambda/(3 \times n).$$

9. The optical recording medium according to any one of claims 1 to 8, wherein the first metal reflective layer is made of an alloy mainly containing Ag with a weight ratio of Ag being set to not less than 97%.

10. The optical recording medium according to any one of claims 1 to 8, wherein the first metal reflective layer is made of an alloy represented by a composition formula $Ag_xM_{1-x}$, in which M is at least the one selected from the group consisting of Pd, Cu, Pt, Rh, Nd and Ni and x represents a value of not less than 97% in weight ratio.

11. The optical recording medium according to any one of claims 1 to 8, wherein the first metal reflective layer is made of Ag or an alloy material mainly containing Ag, with the layer thickness being set in a range from not less than 10 nm to not more than 75 nm.

12. The optical recording medium according to any one of claims 1 to 8, wherein the first metal reflective layer is made of Al or a metal material mainly containing Al, with the layer thickness being set in a range from not less than 7 nm to not more than 50 nm.

13. The optical recording medium according to any one of claims 1 to 12, wherein the track pitch is set in a range from not less than 0.24 $\mu$m to not more than 0.36 $\mu$m and the shortest pit length is set in a range from not less than 0.14 $\mu$m to not more than 0.21 $\mu$m.

14. The optical recording medium according to any one of claims 1 to 13, which is reproduced by an optical recording medium reproducing apparatus provided with an optical system in which the wavelength $\lambda$ of the light beam from light source is set in a range from not less than 400 nm to not more than 410 nm and the numerical aperture NA of the objective lens is set in a range from not less than 0.84 to not more than 0.86.

15. A manufacturing method for an optical recording medium in which a light beam is applied to a signal face so that information is reproduced, comprising;
recording information on a substrate by forming pit rows constituted by concavities and convexities with a predetermined track pitch in which a depth d(S) of the shortest pit in the substrate satisfies a range represented by $\lambda/(6 \times n) < d(S) < \lambda/(3 \times n)$;
forming a metal reflective layer on the substrate as a signal face so that the depth of the shortest pit is made different from a depth of the longest pit; and
forming a transparent resin layer on the metal reflective layer.

16. The manufacturing method for an optical recording medium according to claim 15, wherein the metal reflective layer is deposited and formed through an ion beam sputtering process, with the layer-forming time being set to not more than 1 s.

**17.** The manufacturing method for an optical recording medium, according to claim 15, wherein the metal reflective layer is formed through a magnetron sputtering process and an Ar pressure at the time of forming the layer is set in a range from not less than 0.2 Pa to not more than 0.7 Pa, with the layer-forming time being set to not more than 3 s.

## Fig. 1

104

103

105

101

## Fig. 2

# Fig. 3

EP 1 544 851 A1

Fig. 4

403

406

402

404

407

405

408

401

## Fig. 5

## Fig. 6

## Fig. 7

## Fig. 8

Fig. 9

# Fig. 10

102

104

103

101

Fig. 11

$\alpha$ (S)    $\alpha$ (L)

1104

1102    1103

1105    1106

1101

EP 1 544 851 A1

# Fig. 12

(a)

(b)

(c)

(d)

(e)

EP 1 544 851 A1

24

# Fig. 13

(a)

(b)

(c)

(d)

(e)

punching process

(f)

# Fig. 14

Minimum value of jitter (%)

Layer thickness of mirror face portion of AgPdCu (nm)

$\lambda / 3n$
$\lambda / 5n$

# Fig. 15

Minimum value of jitter (%)

Layer thickness of mirror face portion of Al (nm)

$\lambda / 3n$
$\lambda / 5n$

# Fig. 16

(a)

(b)

(c)

(d)

(e)

1601
1602
1603
1604
1605
1606

**EP 1 544 851 A1**

### INTERNATIONAL SEARCH REPORT

| International application No. |
|---|
| PCT/JP03/10243 |

**A. CLASSIFICATION OF SUBJECT MATTER**
Int.Cl⁷ G11B7/007, 7/24, 7/26

According to International Patent Classification (IPC) or to both national classification and IPC

**B. FIELDS SEARCHED**

Minimum documentation searched (classification system followed by classification symbols)
Int.Cl⁷ G11B7/00-7/013, 7/24, 7/26, 7/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-250506 A (Yamaha Corp.), | 1-8,13 |
| Y | 17 September, 1999 (17.09.99), Full text (Family: none) | 9-12,14-17 |
| Y | JP 5-012671 A (Fuji Photo Film Co., Ltd.), 22 January, 1993 (22.01.93), Par. Nos. [0047], [0048] (Family: none) | 9-12,15-17 |
| Y | JP 5-054393 A (Hitachi Maxell, Ltd.), 05 March, 1993 (05.03.93), Par. No. [0020] (Family: none) | 9-10,15-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September, 2003 (02.09.03) | 16 September, 2003 (16.09.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

28

**INTERNATIONAL SEARCH REPORT**

International application No.

PCT/JP03/10243

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-008269 A (Sony Corp.), 11 January, 2002 (11.01.02), Par. Nos. [0026], [0028], [0034] (Family: none) | 14 |

Form PCT/ISA/210 (continuation of second sheet) (July 1998)